# EUROPÄISCHE PATENTSCHRIFT

(11) **EP 1 213 199 B1**
(45) Veröffentlichungstag und Bekanntmachung des Hinweises auf die Patenterteilung: **21.02.2007**
(21) Anmeldenummer: 01128971.7
(22) Anmeldetag: 06.12.2001
(51) Int. Cl.: B60T 8/88

(54) **Spannungsversorgung für Logik-und Leistungselektronik eines Radstellers**
Power supply for electronic control circuit and for drive circuit of a wheel brake actuator
Circuit d'alimentation pour unité de commande électronique et pour le circuit de commande d'un actionneur de freinage de roue

(30) Priorität: 07.12.2000 DE 10060702
(43) Veröffentlichungstag der Anmeldung: 12.06.2002
(73) Patentinhaber: KNORR-BREMSE SYSTEME FÜR NUTZFAHRZEUGE GMBH, 80809 München (DE)
(72) Erfinder: Arlt, Andreas, 70499 Stuttgart (DE); Beyse, Thorsten, 67133 Maxdorf (DE); Kächele, Heinz, 89177 Ballendorf (DE); Gscheidle, Wolfgang, 71720 Oberstenfeld (DE)
(74) Vertreter: Seemann, Ralph

(56) Entgegenhaltungen:
- EP-A- 0 467 112
- DE-A- 4 022 671
- DE-A- 4 242 177
- DE-A- 4 436 372
- DE-A- 19 717 686
- DE-A- 19 751 429
- DE-A- 19 829 126
- DE-A- 19 861 144
- DE-A- 19 941 481

## Beschreibung

Die Erfindung betrifft einen Radsteller zum Einstellen des Bremsdrucks für ein einzelnes dem Radsteller zugeordnetes Rad mit wenigstens einer Spannungsversorgungsvorrichtung, wenigstens einer Endstufe zur Ansteuerung eines Bremsventils, und einer Elektronikeinheit zur Ansteuerung der Endstufe und zur Aufnahme und Weitergabe von fahrzeugspezifischen Daten an eine zentrale Steuer- und/oder Regeleinheit, wobei die wenigstens eine Spannungsversorgungsvorrichtung zur separaten Spannungsversorgung der Endstufe und der Elektronikeinheit des Radstellers vorgesehen ist,

Überlicherweise ist ein Radsteller mit wenigstens einer Spannungsversorgungsvorrichtung, wenigstens einer Endstufe zur Ansteuerung eines Bremsventils und einer Elektronikeinheit zur Ansteuerung der wenigstens einen Endstufe und/oder zur Aufnahme und Weitergabe von fahrzeugspezifischen Daten an eine zentrale Steuer- und/oder Regeleinheit ausgebildet.

In DE-A-197 51 429 ist eine Schaltungsanordnung zur Spannungsüberwachung einer geregelten Ausgangsspannung in einem Kraftfahrzeug offenbart. Die Schaltungsanordnung überwacht das Überschreiten und Unterschreiten bestimmter Schwellwerte, wobei das Schaltungsteil zur Regelung der Ausgangsspannung und der Schaltungszeit zur Überwachung des Über- bzw. Unterschreitens der Schwellwerte auf einem Chip integriert ist und wobei zwei Referenzspannungen Verwendung finden.

Aus DE-A-198 29 126 ist überdies ein elektromechanisches Bremssystem bekannt, das Bremsmodule aufweist. Es existiert eine Verbindung zwischen den Modulen durch einen redundanten Datenbus. Ein Zentralmodul wertet Bremssignale mit einer Sensorik aus und überprüft, ob ein Fehler vorliegt. Eine entsprechende Bremsbetätigung eines Fahrers wird durch die Elektronik in Signale umgewandelt, um eine entsprechende Bremsung zu ermöglichen.

Außerdem ist in DE-A-42 42 177 eine Schaltungsanordnung zur Überwachung von einer Vielzahl von Spulen und der Endstufen zur Ansteuerung dieser Spulen einer geregelten Bremsanlage offenbart. Die Spulen werden durch Endstufen angesteuert und über eine gemeinsame Versorgungsleitung und über ein gemeinsames Relais mit einer Versorgungsspannung verbunden und abgetrennt. Es handelt sich bei der Bremsanlage um ein zentrales Bremssystem.

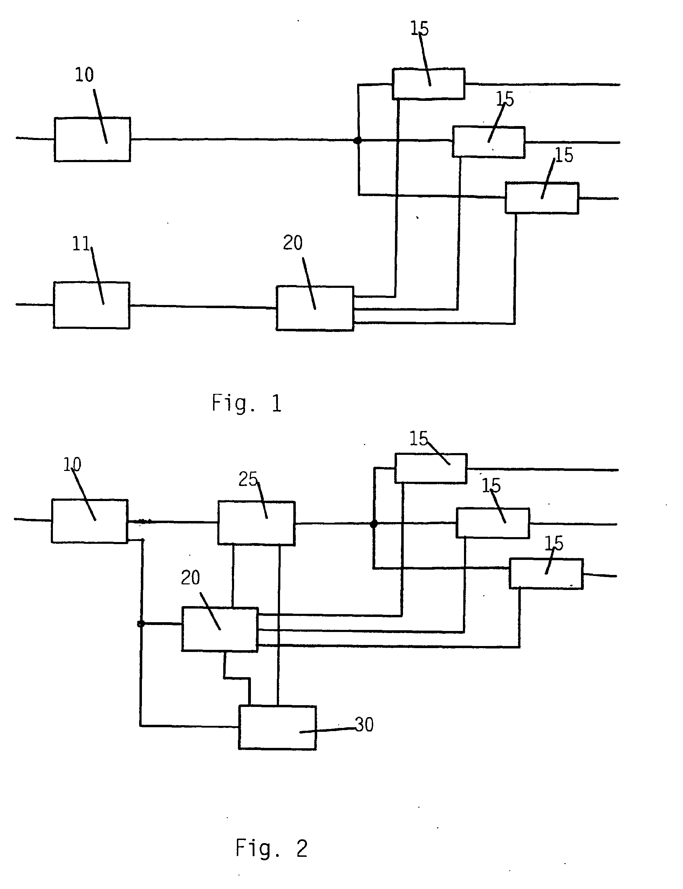

EP-A-0 467 112 betrifft ferner ein elektronisches Bremssystem für Straßenfahrzeuge mit einer dezentral ausgebildeten Elektronik und einem Zentralmodul, wobei sowohl das Zentralmodul als auch die Radmodule eigene Intelligenz aufweisen. Die Radmodule sind für die Versorgung des jeweils zugehörigen Rades zuständig und enthalten neben Mikrocomputern auch Leistungsendstufen. Die Stromversorgung der Leistungsendstufe ist über einen Schalter zusammen mit der Stromversorgung für den Mikrocomputer des Radmoduls abschaltbar, jedoch nicht getrennt davon (vgl. Fig. 2).

Bei üblichen elektronisch geregelten Bremssystemen von Fahrzeugen stellen die Radsteller den Bremsdruck von dem jeweiligen Rad ein. Dieses wird üblicherweise als "brake by wire" bezeichnet. Der Bremsdruck, der über das Bremspedal vorgegeben wird, wird in ein elektronisches Bremssystem weitergegeben, das den vom Fahrer ermittelten Bremsdruck verarbeitet und einen entsprechenden Bremsdruck in Form von Daten an die Radsteller des Fahrzeugs weitergibt. Bei den Radstellern liegt ein Druckvorrat vor, so dass sofort mit dem richtigen Bremsdruck gebremst werden kann. Üblicherweise sind vier elektrische Leitungen zum Radsteller zu verlegen, und zwar zwei Leitungen für die Spannungsversorgung und zwei Leitungen für die Kommunikationsverbindung für die Daten.

Es kann nun vorkommen, dass beispielsweise eine Endstufe zur Ansteuerung eines Bremsventils sehr heiß wird, so dass diese Endstufe Funktionsprobleme bekommt. Dieses kann bis zu einem vollständigen Ausfall der Endstufe führen und damit zu einer fehlerhaften Bremsleistung an dem entsprechenden Rad, das dem Radsteller zugeordnet ist, das die Endstufe umfasst.

Aufgabe der vorliegenden Erfindung ist es, einen Radsteller der eingangs genannten Art derart weiterzubilden, dass derartige Probleme schnell erkannt und Gegenmaßnahmen getroffen werden können, so dass eine ausreichende Bremsleistung auch bei einer fehlerbehafteten Endstufe gewährleistet ist. Außerdem ist es Aufgabe der vorliegenden Erfindung, die durch zu viel Hitze fehlerhaft gewordene Endstufe schnell wieder zuzuschalten, sobald diese abgekühlt ist. Hierbei sollen möglichst kurze und wenige Kabel im Fahrzeug verlegt werden, um so den Einbauaufwand und damit die Kosten der entsprechenden Fahrzeuge zu minimieren.

Gelöst wird diese Aufgabe durch einen Radsteller der eingangs genannten Art, der dadurch weitergebildet ist, dass bei einem Abschalten der Spannungsversorgung für die Endstufe die Elektronikeinheit des Radstellers für das einzelne Rad weiterhin mit Spannung von der Spannungsversorgungsvorrichtung versorgbar ist, wobei ab Erreichen einer bestimmten Temperatur der Endstufe ein Abschalten der Endstufe und nach Abkühlen der Endstufe unter eine bestimmte Temperatur ein Wiedereinschalten der Endstufe vorgesehen ist.

Durch diese Maßnahme ist ein getrenntes Abschalten der jeweiligen defekten Endstufe bzw. zu heiß gewordenen Endstufe bzw. der Endstufen möglich, so dass weiterhin fahrzeugspezifische Daten, insbesondere beispielsweise die Radgeschwindigkeit des dem Radsteller zugeordneten Rades, Temperaturen an kritischen Punkten oder ähnliches der Zentralelektronik bzw. der zentralen Steuer- und/oder Regeleinheit übermittelt werden können. Beim Abschalten der Spannung bzw. Spannungsversorgung für die wenigstens eine Endstufe ist es beispielsweise möglich, sämtliche Endstufen dieses Radstellers abzuschalten, so dass eine "back up"-Bremsung, also eine normale konventionelle pneumatische Bremsung möglich ist. Ein Abschalten einer oder aller Endstufen wird beispielsweise dann vorgenommen, wenn eine Endstufe ständig leitend ist. Das Abschalten der Spannung kann durch die Elektronikeinheit geschehen oder durch die zentrale Steuer- und/oder Regeleinheit. Im Rahmen dieser Erfindung umfasst der Begriff Elektronikeinheit auch eine Steuereinheit bzw. einen Mikroprozessor oder Microcontroller oder Computer. Die Elekronikeinheit erhält entsprechende Daten über die Funktionsfähigkeit der jeweiligen Endstufen, also ob diese beispielsweise ständig leitend oder zu heiß sind. Diese Daten werden in der Elektronikeinheit verarbeitet und führen gegebenenfalls zu einem Abschalten der wenigstens einen oder aller Endstufen.

Vorzugsweise sind zwei Spannungsversorgungsvorrichtungen vorgesehen, so dass ein sehr sicherer Betrieb des Radstellers möglich ist. Insbesondere vorzugsweise dient die eine erste Spannungsversorgungsvorrichtung dem Abbau bzw. dem Entkoppeln von Spannungsspitzen bzw. Überspannungen aufgrund von Bordnetzstörungen. Diese Spannungsversorgungsvorrichtung dient also vorzugsweise im Wesentlichen als Bordnetzschutz und umfasst insbesondere Kondensatoren und Leistungsdioden. Vorzugsweise generiert die zweite Spannungversorgungsvorrichtung eine Spannung, die kleiner als die Bordnetzspannung ist (z.B. 5 V oder 3,3 Volt). Diese kleinere Spannung wird aus der Bordnetzspannung (z.B. 24 Volt, 12 Volt) erzeugt. Mittels der zweiten Spannungsversorgungsvorrichtung wird dann vorzugsweise die Elektronikeinheit gespeist. Vorzugsweise ist eine Mehrzahl von Endstufen zur Ansteuerung eines Bremsventils vorgesehen, die insbesondere vorzugsweise abgeschaltet werden, wenn die Spannungsversorgung einer Endstufe abgeschaltet wird.

Eine besonders sichere vorzugsweise Ausgestaltung liegt dann vor, wenn zwischen der wenigstens einen Spannungsversorgungsvorrichtung und der wenigstens einen Endstufe eine die Spannung weiterleitende oder die Spannung sperrende Schaltvorrichtung vorgesehen ist. Insbesondere vorzugsweise ist die Schaltvorrichtung ein Endstufen-Enable. Vorzugsweise ist mittels der Elektronikeinheit die Schaltvorrichtung weiterleitend oder sperrend schaltbar.

Wenn vorzugsweise eine Überwachungsvorrichtung vorgesehen ist, die die fehlerfreie Funktion der Elektronikeinheit überwacht, ist der sichere Betrieb weiter erhöht. Vorzugsweise ist die Überwachungsvorrichtung ein Watchdog. Insbesondere wird durch die Überwachungsvorrichtung festgestellt, ob die Daten über die Endstufen richtig ausgewertet werden oder ob die Elektronikeinheit in einem ordnungsgemäßen Arbeitszustand ist und nicht abgestürzt oder ausgeschaltet ist.

Vorzugsweise ist mittels der Überwachungsvorrichtung die Schaltvorrichtung weiterleitend oder sperrend schaltbar. Durch diese vorzugsweise Ausgestaltung der Erfindung kann die Spannungsversorgung der wenigstens einen Endstufe beendet werden, wenn sich die Elektronikeinheit in einem fehlerhaften Status befindet. Vorzugsweise ist beim Abschalten der Spannung für die wenigstens eine Endstufe die Überwachungsvorrichtung weiterhin mit Spannung versorgbar.

Vorzugsweise ist ein Bremssystem für Fahrzeuge mit wenigstens einem der vorgenannten Radsteller versehen.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine schematische Blockbilddarstellung einer erfindungsgemäßen Ausführungsform und
- Fig. 2: eine schematische Blockbilddarstellung einer weiteren Ausführungsform der Erfindung.

In den folgenden Figuren sind gleiche Merkmale durch dieselben Bezugsziffern gekennzeichnet, so dass von einer erneuten Vorstellung abgesehen wird.

Fig. 1 zeigt eine schematische Blockbilddarstellung einer Ausführungsform der Erfindung. In Fig. 1 wird das erste Netzteil 10 und das zweite Netzteil 11 über jeweils eine Versorgungsleitung mit einer Versorgungsspannung von 24 Volt oder 12 Volt des Bordnetzes gespeist. Das erste Netzteil 10 umfasst Kondensatoren und Leistungsdioden und dient dazu, die weiteren Komponenten des Radstellers vor Überspannungen des Bordnetzes bzw. Bordnetzstörungen zu schützen. Der erfindungsgemäße Radsteller umfasst sämtliche Komponenten, die in Fig. 1 dargestellt sind. Das erste Netzteil 10 ist mit drei Endstufen 15 verbunden und speist diese Endstufen mit 24 Volt oder 12 Volt Spannung. Die Endstufen 15 sind beispielsweise Leistungshalbleiterendstufen vom Typ BTS612 der Infineon Technologies AG.

Die Endstufen 15 steuern beispielsweise Ventile, die die Bremsen von einem Rad ansteuern. Die Ventile sind in der Fig. 1 nicht dargestellt. Die Ansteuerung geschieht über die rechtsseitigen Leitungen der Endstufen 15. Eine der Endstufen 15 dient beispielsweise zur Druckerhöhung in der Bremse, d.h. die Bremsfunktion wird erhöht, die zweite zur Druckerniedrigung, d.h. es wird weniger gebremst, und die dritte schaltet beispielsweise in den pneumatischen Rückhaltemodus, wenn diese Endstufe 15 nicht bestromt ist. In diesem Fall geschieht eine normale konventionelle pneumatische Bremsung, also der "back-up"-Fall.

Das zweite Netzteil 11 ist mit einem Computer 20 verbunden, der auch als µC bezeichnet wird. Der Computer 20 erhält von dem zweiten Netzteil 11 beispielsweise eine Spannung von 5 Volt oder eine niedrigere Spannung. Durch diese Maßnahme ist es möglich, aufgrund der kurzen Kabelwege tatsächlich mit 5 Volt am Computer zu arbeiten und nicht mit beispielsweise 4,5 Volt, wenn sehr lange Spannungsversorgungsleitungen Verwendung finden, wie im Stand der Technik üblich.

Der Computer 20 steuert die Endstufen 15 mit den angedeuteten Leitungen an. Der Computer 20 erhält ferner fahrzeugspezifische Daten und kann beispielsweise mit einer in Fig. 1 nicht dargestellten Zentralelektronik kommunizieren. Vom Radsteller wird beispielsweise die Drehzahl des Rades aufgenommen und kann in der Zentralelektronik weiterverarbeitet werden.

Sofern eine Endstufe beispielsweise dauerhaft leitend geworden ist, ist eine funktionsgerechte Bremsung dadurch möglich, dass dieser Fehler in der Endstufe von dem Computer 20 bemerkt wird und eine Abschaltung wenigstens dieser Endstufe 15 durch den Computer 20 vorgenommen wird. Vorzugsweise wird zumindest diejenige Endstufe abgeschaltet, die für den "back-up"-Fall vorgesehen ist, sobald diese nicht bestromt ist. Die beiden anderen Endstufen sollten in diesem Fall auch nicht mehr angesteuert werden. Es kann auch eine Abschaltung sämtlicher Endstufen 15 vorgenommen werden, und zwar entweder durch den Computer 20 oder die Zentralelektronik. Durch diese erfindungsgemäße Ausgestaltung der Erfindung ist ein schnelles Wiedereinschalten der Endstufen möglich, sobald der Fehler behoben ist oder sobald sich der Fehler von alleine behoben hat, beispielsweise durch Abkühlen der Endstufe.

Vorzugsweise ist ein Temperatursensor für jede Endstufe vorgesehen, wobei ab Erreichen einer bestimmten Temperatur ein Abschalten dieser Endstufe bzw. sämtlicher Endstufen vorgenommen wird. Ferner ist vorzugsweise ein Funktionstest der Endstufen vorgesehen.

In einer weiteren erfindungsgemäßen Ausgestaltung, die in Fig. 2 in einer schematischen Blockdarstellung dargestellt ist, ist zwischen dem ersten Netzteil 10 und den Endstufen 15 ein Endstufen-Enable 25 bzw. eine Schaltvorrichtung 25 vorgesehen, der entweder über den Computer 20 gesteuert werden kann oder über einen Watchdog 30 oder über den Computer 20 und den Watchdog 30 zusammen. Durch diese Weiterbildung der Erfindung ist eine noch sicherere Funktion des Radstellers möglich. Auch in diesem Ausführungsbeispiel umfasst der Radsteller sämtliche in Fig. 2 dargestellten Komponenten. Der Watchdog 30 überwacht in diesem Fall noch den Computer 20, ob dieser ordnungsgemäß funktioniert oder sich beispielsweise in einem Fehlermodus befindet. In diesem Ausführungsbeispiel ist auch nur das erste Netzteil 10 in Verwendung. Das erste Netzteil 10 liefert in diesem Fall an zwei verschiedenen Ausgängen vorzugsweise zwei verschiedene Spannungen. Durch Verwendung nur eines Netzteils, wie in Fig. 2 dargestellt, kann insbesondere vorzugsweise auch durch Einsparungen weiterer Komponenten ein Schutz vor Bordnetzstörungen auch bei den durch die niedrigere Spannung versorgten Komponenten vorgesehen sein, wenn vorzugsweise die spannungsversorgenden Elemente in Reihe geschaltet sind. Es handelt sich hierbei dann um quasi zwei Netzteile in einem Netzteil, wobei beim zweiten Netzteil Komponenten, die die Bordstörungen ausfiltern, gespart werden können. Es kann ferner vorgesehen sein, dass der Computer den Watchdog 30 überwacht und diesen bei einer fehlerhaften Funktion ausschaltet und beispielsweise eine Fehlermeldung erzeugt, die z.B. an die Zentralelektronik weitergeleitet wird.

Der Watchdog 30 oder die Überwachungsvorrichtung 30 kann derart ausgestaltet sein, dass die ordnungsgemäße Funktionsfähigkeit des Computers regelmäßig überprüft wird oder aber festgestellt werden kann, dass sich der Computer 20 beispielsweise in einem Fehlermodus befindet. Hierzu kann der Watchdog 30 auch Daten über beispielsweise die Endstufen selbst erhalten und diese auswerten bzw. von der Zentralelektronik entsprechend ausgewertete Daten zur Verfügung gestellt bekommen, um daraufhin den Computer 20 zu veranlassen die Endstufen 15 auszuschalten oder auch das Endstufen-Enable 25 bzw. die Schaltvorrichtung 25 zu veranlassen, die Endstufen 15 nicht mehr mit Spannung zu versorgen. Die Überwachungsvorrichtung kann vorzugsweise einen Monoflop umfassen oder im Wesentlichen in einem Monoflop bestehen. Der Monoflop überprüft, ob bzw. eine CAN-Verbindung aufgebaut ist und ob der Computer funktioniert. Falls diese Fragen mit ja beantwortet werden, wird ein Triggersignal zum Freigeben gesetzt, bei nein bleibt dieses gesperrt.

Die fahrzeugrelevanten Daten können einerseits direkt von entsprechenden Sensoren dem Computer 20 zugeführt werden oder aber als Rückmeldung von den Endstufen 15 dem Computer zugeführt werden. Ferner ist es vorzugsweise möglich, die Zentralelektronik mit dem Computer 20 zu verbinden und/oder mit dem Watchdog 30, um einen Datenaustausch und eine Steuerung zu ermöglichen. Alternativ hierzu ist es möglich, dass die Zentralelektronik bei einer Notabschaltung den gesamten Radsteller nicht mehr mit Spannung versorgt.

### Bezugszeichenliste

- 10: erstes Netzteil
- 11: zweites Netzteil
- 15: Endstufe
- 20: Computer
- 25: Endstufen-Enable
- 30: Watchdog

## Patentansprüche

1. Radsteller zum Einstellen des Bremsdrucks für ein einzelnes dem Radsteller zugeordnetes Rad mit wenigstens einer Spannungsversorgungsvorrichtung (10, 11), wenigstens einer Endstufe (15) zur Ansteuerung eines Bremsventils, und einer Elektronikeinheit (20) zur Ansteuerung der Endstufe (15) und zur Aufnahme und Weitergabe von fahrzeugspezifischen Daten an eine zentrale Steuer- und/oder Regeleinheit, wobei die wenigstens eine Spannungsversorgungsvorrichtung (10, 11) zur separaten Spannungsversorgung der Endstufe (15) und der Elektronikeinheit des Radstellers (20) vorgesehen ist, **dadurch gekennzeichnet, dass** bei einem Abschalten der Spannungsversorgung für die Endstufe (15) die Elektronikeinheit (20) des Radstellers für das einzelne Rad weiterhin mit Spannung von der Spannungsversorgungsvorrichtung (10, 11) versorgbar ist, wobei ab Erreichen einer bestimmten Temperatur der Endstufe ein Abschalten der Endstufe und nach Abkühlen der Endstufe unter eine bestimmte Temperatur ein Wiedereinschalten der Endstufe vorgesehen ist.

2. Radsteller nach Anspruch 1, **dadurch gekennzeichnet, dass** eine Mehrzahl von Endstufen (15) vorgesehen ist, wobei ein Abschalten der Spannungsversorgung wenigstens einer Endstufe (15) zur Abschaltung der Mehrzahl von Endstufen führt.

3. Radsteller nach Anspruch 1 oder 2, **dadurch gekennzeichnet, dass** zwei Spannungsversorgungsvorrichtungen (10, 11)vorgesehen sind.

4. Radsteller nach einem der Ansprüche 1 bis 3, **dadurch gekennzeichnet, dass** zwischen der wenigstens einen Spannungsversorgungsvorrichtung (10, 11) und der wenigstens einen Endstufe (15) eine die Spannung weiterleitende oder die Spannung sperrende Schaltvorrichtung (25) vorgesehen ist.

5. Radsteller nach Anspruch 4, **dadurch gekennzeichnet, dass** mittels der Elektronikeinheit (20) die Schaltvorrichtung (25) weiterleitend oder sperrend schaltbar ist.

6. Radsteller nach einem oder mehreren der Ansprüche 1 bis 5, **dadurch gekennzeichnet, dass** eine Überwachungsvorrichtung (30) vorgesehen ist, die die fehlerfreie Funktion der Elektronikeinheit (20) überwacht.

7. Radsteller nach Anspruch 6, **dadurch gekennzeichnet, dass** mittels der Überwachungsvorrichtung (30) die Schaltvorrichtung (25) weiterleitend oder sperrend schaltbar ist.

8. Radsteller nach Anspruch 6 oder 7, **dadurch gekennzeichnet, dass** beim Abschalten der Spannungsversorgung der wenigstens einen Endstufe (15) die Überwachungsvorrichtung (30) weiterhin mit Spannung versorgbar ist.

9. Bremssystem für Fahrzeuge mit wenigstens einem Radsteller nach einem oder mehreren der Ansprüche 1 bis 8.

## Claims

1. Wheel brake actuator for setting the brake pressure for a single wheel associated with the wheel brake actuator, comprising at least one power supply unit (10, 11), at least one terminal stage (15) for controlling a brake valve, and an electronic unit (230) for controlling said terminal stage (15) and for receiving and transferring vehicle-specific data to a central controller and/or regulator unit, wherein said at least one power supply unit (10, 11) is provided for the separate power supply of said terminal stage (15) and said electronic unit of the wheel brake actuator (20), **characterised in that** by the time of deactivation of said power supply unit for said terminal stage (15), the power supply to said electronic unit (20) of the wheel brake actuator for said single wheel can be continued with a voltage from said power supply unit (10, 11), with deactivation of said terminal stage being provided from the point at which a certain temperature of said terminal stage is reached and with re-activation of said terminal stage being provided after said terminal stage has cooled down to a temperature lower than a defined level.

2. Wheel brake actuator according to Claim 1, **characterised in that** a plurality of terminal stages (15) is provided, with deactivation of said power supply unit of at least one terminal stage (15) resulting in the deactivation of said plurality of terminal stages.

3. Wheel brake actuator according to Claim 1 or 2, **characterised in that** two power supply units (10, 11) are provided.

4. Wheel brake actuator according to any of the Claims 1 to 3, **characterised in that** a switching device (25) is provided between said at least one power supply unit (10, 11) and said at least one terminal stage (15), which transfers the voltage or which cuts-off the voltage.

5. Wheel brake actuator according to Claim 4, **characterised in that** said switching device (25) can be switched to a transferring state or a cut-off state by means of said electronic unit (20).

6. Wheel brake actuator according to one or several of the Claims 1 to 5, **characterised in that** a monitoring device (30) is provided that monitors said electronic unit (20) for faultless functioning.

7. Wheel brake actuator according to Claim 6, **characterised in that** said switching device (25) can be switched to a transferring stage or a cut-off state by means of said monitoring device (30).

8. Wheel brake actuator according to Claim 6 or 7, **characterised in that** by the time by which said power supply unit of said at least one terminal stage (15) is deactivated, the supply of said monitoring device (30) with a voltage can be continued.

9. Brake system for vehicles comprising at least one wheel brake actuator according to one or several of the Claims 1 to 8.

## Revendications

1. Actionneur de freinage de roue à ajuster la pression de freinage pour une seule roue affectée à l'actionneur de freinage de roue, comprenant au moins un bloc d'alimentation de courant (10, 11), au moins un étage terminal (15) à commander une soupape de freinage et une unité électronique (230) à commander ledit étage terminal (15) ainsi qu'à recevoir et transmettre des données spécifiques du véhicule à une unité centrale de commande et/ou de réglage, dans lequel ledit au moins un bloc d'alimentation de courant (10, 11) est formé pour l'alimentation séparée en courant dudit étage terminal (15) et de ladite unité électronique de l'actionneur de freinage de roue (20), **caractérisé en ce qu'**au temps de désactivation dudit bloc d'alimentation de courant pour ledit étage terminal (15), l'alimentation en courant de ladite unité électronique (20) de l'actionneur de freinage de roue pour ladite seule roue se peut continuer à une tension dudit bloc d'alimentation de courant (10, 11), à la désactivation dudit étage terminal étant envisagé à partir du point, auquel une certaine température dudit étage terminal est atteinte et à la réactivation dudit étage terminal étant envisagé après le refroidissement dudit étage terminal à un niveau inférieur à une température définie.

2. Actionneur de freinage de roue selon la revendication 1, **caractérisé en ce qu'**une pluralité d'étages terminaux (15) est disposée, à la désactivation dudit bloc d'alimentation de courant d'au moins un étage terminal (15) résultant en la désactivation de ladite pluralité d'étages terminaux.

3. Actionneur de freinage de roue selon la revendication 1 or 2, **caractérisé en ce que** deux blocs d'alimentation de courant (10, 11) sont disposés.

4. Actionneur de freinage de roue selon une quelconque des revendications 1 à 3, **caractérisé en ce qu'**un dispositif commutateur (25) est disposé entre ledit au moins un bloc d'alimentation de courant (10, 11) et ledit au moins un étage terminal (15), qui transmet la tension ou bloque la tension.

5. Actionneur de freinage de roue selon la revendication 4, **caractérisé en ce que** ledit dispositif commutateur (25) se peut commuter en un état de transmission ou en un état bloqué moyennant ladite unité électronique (20).

6. Actionneur de freinage de roue selon une ou plusieurs des revendications 1 à 5, **caractérisé en ce qu'**un dispositif de monitorage (30) est disposé, qui surveille ladite unité électronique (20) en vue d'un fonctionnement sans défaut.

7. Actionneur de freinage de roue selon la revendication 6, **caractérisé en ce que** ledit dispositif commutateur (25) se peut commuter en un état de transmission ou en un état bloqué moyennant ledit dispositif de monitorage (30).

8. Actionneur de freinage de roue selon la revendication 6 or 7, **caractérisé en ce qu'**au temps, auquel ledit bloc d'alimentation de courant dudit au moins un étage terminal (15) est désactivé, l'alimentation en tension dudit dispositif de monitorage (30) se peut continuer.

9. Système de freins pour véhicules, comprenant au moins un for actionneur de freinage de roue selon une ou plusieurs des revendications 1 à 8.
